# EUROPEAN PATENT SPECIFICATION

(11) **EP 0 605 976 B1**
(45) Date of publication and mention of the grant of the patent: **29.01.1997**
(21) Application number: 93310167.7
(22) Date of filing: 16.12.1993
(51) Int. Cl.: E01F 15/00, B60G 17/033, B66C 19/00

(54) **Highway barrier transporter**
Vorrichtung zur Verlagerung einer Fahrseitenbegrenzung
Dispositif de transport de barrière routière

(30) Priority: 04.01.1993 US 399
(43) Date of publication of application: 13.07.1994
(73) Proprietor: ENERGY ABSORPTION SYSTEMS, INC., Chicago, Illinois 60601 (US)
(72) Inventor: Quittner, John P., Castle Cove, NSW 2069 (AU); Horton, Fred, Illawong, NSW 2234 (AU); Denman, Owen S., Roseville, California 95661 (US)
(74) Representative: Bayliss, Geoffrey Cyril

(56) References cited:
- EP-A- 0 172 062
- WO-A-89/00928
- DE-U- 8 915 625
- FR-A- 2 609 262
- GB-A- 808 673
- US-A- 4 666 332
- US-A- 5 088 874

## Description

This invention relates to highway barriers, and in particular to a transporter for moving a length of interconnected highway barriers along a roadway.

Highway barriers are commonly used to form temporary walls between two lines of traffic or between a line of traffic and a construction zone.

One commonly used highway barrier is formed of concrete and is provided with lugs at each end that allow adjacent barriers to be linked together. When used to protect a construction site, it is often necessary to move such barriers along the length of a roadway as a construction crew advances from one highway section to the next.

One effective highway barrier is described in Quittner U.S. Patent 4,500,225. This barrier has a T-shaped upper end which is used to lift the barrier, as for example in shifting the barrier from one lane to a next adjacent lane. Note in particular the barrier transfer device shown in Quittner '225, which includes an S-shaped conveyor that operates to lift T-shaped barriers, move them laterally to a next adjacent lane, and then deposit the barriers in a new position. This approach has been found to be an extremely efficient method for transferring barriers to allow lane reversal.

However, the problems encountered in transporting barriers longitudinally along a roadway are somewhat different than those encountered in shifting barriers laterally across a roadway. One prior art approach to transporting barriers longitudinally along a roadway is to load the barriers onto a truck and to simply drive the truck along the roadway to the new location. This approach provides the disadvantage that the truck occupies a lane of traffic during loading and transporting operations, and thus interferes with normal traffic flow. Furthermore, the time and manpower required to move the barriers onto and off of the truck may be excessive in many applications.

A second approach of the prior art is to use a transfer device such that shown in Quittner '225 to transport a length of barriers to the new location. This approach reduces the manpower required to load and unload barriers as compared with the use of trucks described above. Booth U.S. Patent 4,653,954 also describes an apparatus for moving a traffic barrier, in which a length of barriers is supported inside a moving apparatus. The transfer devices of Quittner '225 and Booth have been designed primarily to transfer barriers laterally, and have not been optimized to transport barriers longitudinally to a new location.

Another approach to the transportation of barriers along a roadway is disclosed in Burgett U.S. Patent 4,666,332. The Burgett approach is to include wheeled lifting units between adjacent barriers as an integral part of the length of barriers. These wheeled lifting units can be used to raise the barriers for towing. This approach substantially complicates the barriers, because the wheeled lifting units are integrated into the line of barriers.

Quittner U.S. Patent 5,088,874, assigned to the assignee of the present invention, discloses a highway barrier transporter that transports a length of interconnected barriers as a unit. This transporter comprises a plurality of barrier transporting units, each comprising at least one pair of wheels positioned to straddle the barriers, at least one engaging device configured to engage the barriers, and at least one lifting device coupled to the engaging device to lift the engaging device and the engaged barriers. A plurality of articulating couplings interconnect axially adjacent transporting units to form a train configured to straddle the length of highway barriers such that the train can be moved over a length of highway barriers to be transported. One or more tractors are each positioned at a respective end of the train in line with the train to move the train.

Preferably, two tractors are provided, one at each end of the train, in order to eliminate the need for the train to be turned around as it moves back and forth while transporting barriers between an original and a new position.

In the transporter of U.S. Patent 5,088,874, lengths of interconnected barriers are lifted and lowered without disconnecting them from one another, and relatively long lengths of interconnected barriers can be transported by a small crew. This can often be done without obstructing a lane of traffic, because the transporter train and the tractors are sufficiently narrow in width to be able to travel on the breakdown lane of a conventional limited access highway. Additionally, the cost of the barriers is not increased in any way.

It is an object of this invention to provide an improved apparatus and method for efficiently transporting barriers longitudinally along a roadway, without substantially obstructing a traffic lane.

It is a further object to this invention to avoid increasing the cost of the barriers, and in particular to avoid the need for wheeled or lifting units to be incorporated into the barriers themselves.

This invention relates to improvements to a highway barrier transporter of the type having multiple articulated barrier transporting units, each including at least one wheel assembly and at least one lifting assembly. Each lifting assembly is configured to lift, support and lower at least one highway barrier, and each wheel assembly includes at least first and second wheels configured to support the highway barrier above a roadway for longitudinal movement along the roadway with the barrier positioned between the two wheels.

According to an aspect of this invention, a highway barrier transporter of the type described above is provided with a steering system coupled to the wheels of at least a plurality of the barrier transporting units and is operable to steer the coupled wheels to a selected side of the transporter to cause the barrier transporting units each to shift laterally to the selected side during longitudinal movement of the transporter.

A barrier transporter employing this aspect of the invention can be used to shift highway barriers laterally as they are moved longitudinally along a roadway. This feature facilitates movement of a connected series of highway barriers to a new location which is laterally offset with respect to the original location.

The invention itself, together with further objects and attendant advantages, will best be understood by reference to the following detailed description, taken in conjunction with the accompanying drawings, in which:

FIGURE 1 is a side elevational view of a highway barrier transporter that incorporates a presently preferred embodiment of this invention.

FIGURE 2 is a plan view of the transporter of FIG. 1.

FIGURE 3 is a cross-sectional view taken along line 3-3 of FIG. 1.

FIGURE 4 is an enlarged plan view showing a steering gear linkage of the transporter of FIG. 2.

FIGURE 5 is a cross-sectional view taken along line 5-5 of FIG. 4.

FIGURE 6 is a plan view showing the wheels of the transporter of FIG. 2 oriented to move the transporter laterally.

FIGURE 7 is a schematic view of a hydraulic circuit used to steer the transporter of FIG. 1.

FIGURE 8 is a schematic view of a hydraulic circuit used to level the transporter of FIG. 1.

FIGURE 9 is a flow chart illustrating the operation of the controller of FIG. 8.

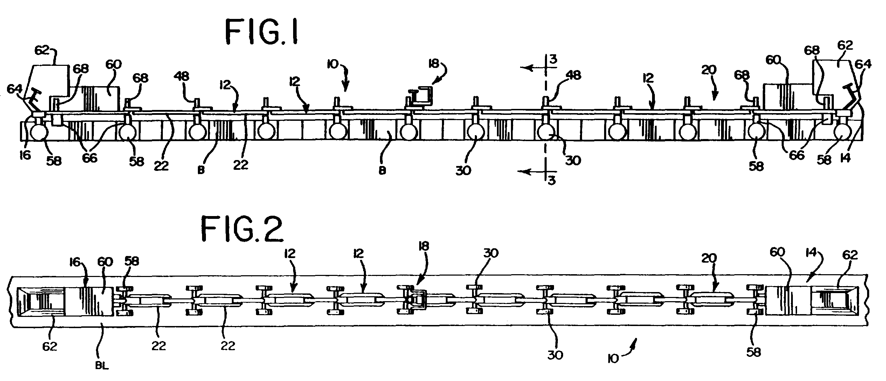

FIG. 1 is an elevation view of a highway barrier transporter 10 which embodies the present invention. The transporter 10 includes a line of interconnected transporting units or trailers 12, and a pair of tractors 14, 16, one arranged at each end of the line of trailers 12. The trailers 12 are joined end to end to form a train, and the train additionally includes an intermediate steering station 18 and an adaptor 20.

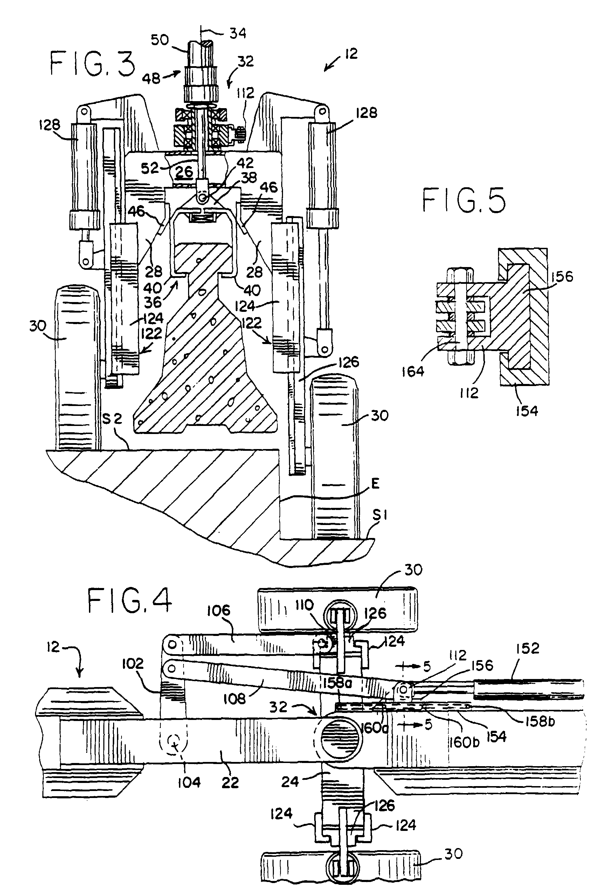

FIG. 2 shows a plan view of the transporter 10, and FIG. 3 shows a cross-sectional view of one of the trailers 12.

As shown in FIGS. 1, 2 and 3, each of the trailers 12 includes a central, longitudinally extending spine 22. One end of the spine 22 supports a U-shaped frame 24 having a central section 26 and a pair of spaced side sections 28. Each central section 26 is pivotably secured to the end of the respective spine 22. Each of the side sections 28 supports at its lower end a wheel 30. Thus, each of the trailers 12 includes a pair of wheels 30 which are arranged to straddle a highway barrier B as shown in FIG. 3.

Adjacent ones of the trailers 12 are interconnected by articulating couplings 32 which allow hinging movement around an axis 34 shown in FIG. 3.

Each of the frames 24 supports an engaging device 36 configured to engage one of the barriers B for lifting. Depending upon the configuration of the barrier B, the engaging device 36 can vary extensively in configuration. However, in this embodiment the engaging device 36 includes a support member 38 to which a pair of jaws 40 are pivotably mounted about an axis 42. A spring is positioned between the jaws 40 to bias them outwardly, away from one another. The frame 24 defines jaw closing surfaces 46 which bear against upper portions of the jaws 40 to automatically close the jaws 40 when the jaws 40 are lifted, and to allow the spring to open the jaws 40 when they are lowered.

As shown in FIG. 3 the barrier B includes a T-shaped upper portion, and the jaws 40 are configured to engage this T-shaped upper portion so as to suspend the barrier B as shown in FIG. 3. Alternately, jaws, pins, or other engaging devices may be configured to engage an alternate barrier (not shown) by fitting into sockets provided in the sides or top of the barrier or by fitting into relieved areas adjacent the base of the barrier. For example, the engaging devices can be adapted for use with the T-shaped slot in the top of the barrier shown in Quittner U.S. Patent 4,624,601. Also, the jaws 40 can be designed to grip a conventional barrier frictionally.

Returning to FIG. 3, each of the frames 24 also supports a lifting device 48. In this embodiment, the lifting device 48 comprises a hydraulic cylinder 50 having an extendable rod 52 which is mounted to the support member 38. By controlling pressure in the hydraulic cylinder 50, the rod 52 can either be (1) raised to the position shown in FIG. 3, in which the jaws 40 are automatically closed by the jaw closing surfaces 46 to lift the barrier B off the ground; or (2) lowered to place the barrier B on the ground and release the jaws 40. In alternate embodiments the lifting device 48 may include other types of actuators such as electric motors or other types of cylinders to achieve the desired lifting action.

Each end of the train of transporting units 12 is connected to a respective tractor 14, 16. Each tractor 14, 16 is arranged to straddle the barriers B and includes two pairs of wheels 58, as shown in FIGS. 1 and 2. Each tractor includes a source of power such as a diesel engine 60 which powers the wheels 58 of the tractors 14, 16 for traction and provides pressurized hydraulic fluid to operate the lifting devices 48 and the other actuators of the transporter 10. Additionally, the engine 60 provides power for steering the tractor and braking the tractors and the trailers 12. Each of the tractors includes a cab 62 for a driver who steers the tractor via a conventional steering gear 64. Each of the tractors includes a pair of engaging devices 66, which may be identical to the engaging devices 36 described above, and a pair of lifting devices 68, which may be identical to the lifting devices 48 described above. The devices 66, 68 are positioned to hold the barriers B beneath the tractor.

The tractors 14, 16 provide important advantages in that they are narrow in width and are configured to straddle the barriers. However, in applications where these advantages can be sacrificed, it is possible to use a conventional truck as a tractor means for towing the transporter.

The transporter 10 includes a number of features to make operation more efficient. The transporter 10 has an overall length greater than a 30.48m (100 feet), which allows it to transport a length of over 30.48m (100 feet) of interconnected barriers B at a time. At the same time, the maximum width of the transporting units 12, the adaptor 20 and the tractors is 1.27m (50 inches). In any case, the width should preferably be less than 1.22 m (four feet) in order to allow the transporter 10 to travel along a break-down lane BL, as shown in FIG. 2, without obstructing traffic on an adjacent roadway. Not all embodiments will have an overall length greater than 30.48m (100 feet), and in some applications the overall length of the transporter 10 may be 15.24m (50 feet) or less.

Another feature of the transporter 10 relates to the manner in which the wheels 30 of individual trailers 12 are automatically steered so as to maintain tracking of the train along a curved or straight path. The preferred linkage is schematically shown in FIG. 4, where two adjacent spines 22 are shown to be pivotably connected by an articulated coupling 32. Additionally, the wheel supporting frame 24 is also pivotable about the axis defined by the coupling 32.

The automatic steering arrangement of FIG. 4 includes a control arm 102 which is pivotably mounted to one of the spines 22 so as to pivot about an axis 104. This control arm 102 is interconnected to the frame 24 by a first link 106 and to the forward end of the next adjacent spine 22 by a second link 108. Suitable attachment points are provided by lugs 110, 112 on the frame 24 and the spine 22, respectively.

The automatic steering arrangement of FIG. 4 operates as follows. When the left hand spine 22 as shown in FIG. 4 pivots in a counterclockwise direction about the coupling 32, the control arm 102 is pivoted in a clockwise direction by the link 108. This movement of the control arm 102 is transmitted by the link 106 to the frame 24 so as to pivot the frame 24 in a counterclockwise direction, thereby orienting the wheels 30 so as to improve the tracking of the train along the original path of the tractor. When the left hand spine 22 pivots in a clockwise direction, the linkage 102, 106, 108 pivots the frame 24 clockwise. The intermediate steering station 18 allows an operator to correct tracking errors not compensated for by the steering arrangement of FIG. 4.

The foregoing features of the transporter 10 are similar to corresponding features of the transporter described in the above identified Quittner U.S. Patent 5,088,847. Further details of the preferred embodiment of the barrier transporter 10 are provided in U.S. Patent 5,088,874, which is hereby incorporated by reference in its entirety.

As best shown in FIG. 3, the wheel assembly of each of the transporting units 12 of the barrier transporter 10 includes a leveling system 120 which positions the wheels 30 vertically so as to maintain the lifting assembly including the engaging device 36 in a level orientation.

The leveling system 120 includes two guides 122, each mounted to guide a respective one of the wheels 30 in vertical movement. Each of the guides 122 includes a guide track 124 and a guide follower 126 shaped to slide along the length of the guide track 122. In this embodiment, each of the guide tracks 124 is vertically oriented and is secured to a respective one of the side sections 28 of the U-shaped frame 24. Each of the guide followers 126 is secured to the axle of the respective wheel 30. For example, each guide track 124 can define a T-shaped slot, and each guide follower 126 can define a complementary shape which allows the follower 126 to slide along the length of the track 124 but prevents relative movement in other directions.

The leveling system 120 also includes two leveling cylinders 128 on each of the transporting units 12. Each leveling cylinder 128 is mounted at its upper end to the respective U-shaped frame 24 and at its lower end to the respective guide follower 126.

FIG. 3 shows on its left hand side the leveling cylinder 128 fully retracted. In this position, the guide follower 126 is positioned in an upper position in the guide track 124. On the right hand side of FIG. 3 the leveling cylinder 128 is shown in an extended position. This arrangement allows the lifting assembly including the engaging device 36 and the attached barrier B to be maintained in a level orientation, even when one of the wheels 30 is positioned on a first slab S1 and the other of the wheels 30 is positioned on a second slab S2 at a different elevation.

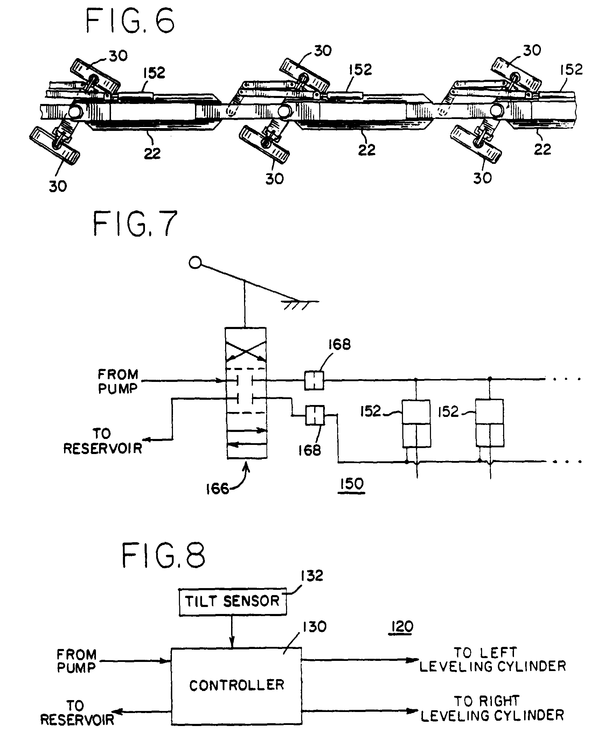

FIG. 8 shows a schematic diagram of additional elements of the leveling system 120 of one of the transporting units 12. As shown in FIG. 8, a leveling controller 130 is connected to a tilt sensor 132. The tilt sensor 132 provides a signal indicating the tilt angle of the U-shaped frame 24 and the attached lifting apparatus. The controller 130 receives hydraulic fluid under pressure from a pump and it returns hydraulic fluid to a reservoir. The controller 130 controls extension and retraction of the left and right leveling cylinders 128 of the respective transporting unit 12 in response to the tilt sensor 132.

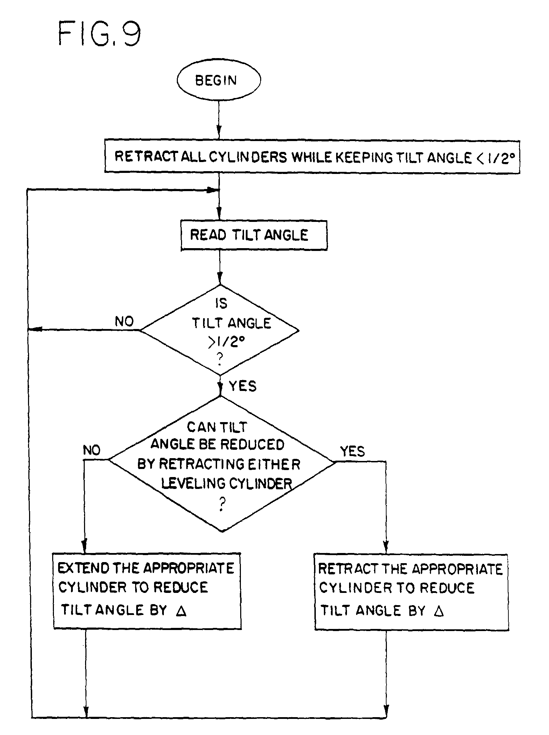

FIG. 9 is a flow chart of the operation of the leveling controller 130. As shown in FIG. 9, all of the leveling cylinders 128 are retracted at the start of operation to the maximum extent possible while maintaining the tilt angle less than one-half degree. This is done to insure that the center of gravity of the lifted barrier B is maintained at the lowest level possible. Once this has been accomplished, a loop is executed repeatedly in which the tilt angle as determined by the tilt sensor 132 is read and compared with a threshold value (one-half degree in this embodiment). If the tilt angle exceeds the threshold the controller 130 then determines whether the tilt angle can be reduced by retracting either leveling cylinder 128. If so, the controller 130 retracts the appropriate leveling cylinder 128 to reduce the tilt angle by an increment indicated by the symbol Δ. If it is not possible to reduce the tilt angle by retracting one of the cylinders 128, the controller 130 extends the appropriate cylinder 128 to reduce the tilt angle by the increment Δ. The program then loops and again reads the tilt angle and repeats the process described above. In this way, the transporting unit 12 is automatically leveled and the center of gravity of any attached barrier B is maintained at the lowest level possible. If required, delays may be incorporated in the loop described above in order to prevent oscillation.

The controller 130 can be implemented in any suitable technology, including digital and analog feedback loops. If implemented as a digital system, programmed microprocessors as well as other types of digital circuits may be used.

Typically, the leveling system 120 will use the same pump and reservoir to supply power to all of the controllers 130. However, since each controller 130 is associated with a respective transporting unit 12, the leveling system 120 described above levels each transporting unit 12 separately and repeatedly as the transporter 10 moves along a roadway.

According to the invention, each of the transporting units 12 includes a steering system 150 as shown in FIGS. 4 and 5. Each steering system 150 includes an actuator such as a hydraulic cylinder 152 oriented generally along the length of the respective spine 22. A guide track 154 and an associated guide follower 156 are also mounted on the respective spine 22. As shown in FIG. 5, the guide follower 156 is secured both to the rod of the actuator 152 and to the link 108 by a pin 164. Movement of the actuator 152 causes the guide follower 156 to move linearly along the length of the guide track 154.

In this embodiment, the two extreme ends of the guide track 154 define openings that receive fixed pins 158a, 158b. These fixed pins define the extreme travel positions of the guide follower 156 in the guide track 154. Additionally, the steering system 150 includes two removable pins 160a, 160b, which are removably mounted in the guide track 154. When the removable pins 160a, 160b are both in position as shown in FIG. 4, the guide follower 156 is immobilized at a central location in the guide track 154 suitable for longitudinal travel of the barrier transporter 10. In this position, the links 106, 108 operate as described above to provide automatic steering compensation.

The actuator 152 can be used to steer the wheels 30 to cause the transporting units 12 to move laterally as the transporter 10 moves longitudinally. This can be done, for example, by removing the removable pins 160b and retracting the actuator 152. When this is done, all of the wheels 30 are steered as shown in Figure 6. When the wheels 30 are positioned as shown in Figure 6, longitudinal movement of the barrier transporter 10 causes each of the transporting units 12 to move laterally. This can be quite useful when it is desired to bring the barriers B to a desired location that is laterally offset with respect to their original position.

Figure 7 shows a schematic diagram of a hydraulic system included in the steering system 150. As shown in Figure 7, the steering system 150 includes a steering controller 166 which is manually controlled and is interposed between the pump and reservoir and the actuators 152. Flow limiting orifices 168 limit the rate at which the actuators 152 extend and retract. The steering controller 166 can be manually controlled to cause all of the actuators 152 to extend or to retract in unison. By removing appropriate ones of the removable pins 160a, 160b and using the steering controller 166, the wheels 30 of the transporting units 12 can be steered either in the clockwise direction showing Figure 6 or the counterclockwise direction (not shown).

### Operation

The transporter 10 can be used to transport an interconnected length of barriers B quickly and efficiently. As a first step, the transporter 10 is driven over a length of highway barriers to be moved such that the tractors and the trailers 12 straddle the barriers B. The engaging devices 36, 66 are then engaged with selected ones of the barriers B as the lifting devices 48, 68 are operated to lift the engaging devices 36, 66 and the engaged barriers B. It should be noted that since the tractors straddle the barriers B, the transporter 10 can simply be driven into position without any preliminary adjustment or moving of the barriers B.

Once the barriers B have been lifted, the tractors can be driven to transport the train of trailers 12 and the engaged highway barriers B to a new location. Because a tractor is provided at each end of the train, there is no need to turn the train around. As shown in FIG. 1, the barriers B are preferably cantilevered beyond the front of the leading tractor which will approach the new location (to the right in FIG. 1). Once the transporter 10 and engaged barriers B have been driven to the new location, the lifting devices 48, 68 are operated to lower the engaged barriers B and to release them from the engaging devices 36, 66. The transporter 10 can then be driven away from the highway barriers B, which are left at the new location. Proper alignment of the barriers B in the new location is simplified by the fact that the forwardmost barrier B is cantilevered out beyond the forwardmost end of the leading tractor.

The leveling system 120 described above allows the transporter 10 to place the barriers B closely adjacent to an edge E between first and second slabs S1, S2 at different elevations (FIG. 3). Because the leveling system 120 operates entirely automatically, no operator action is required to maintain the barriers B in a level orientation as the transporter 10 is moved from a situation in which all of the wheels 30 bear on a roadway at the same level and a situation such as that shown in Figure 3 where the lefthand wheels 30 bear on a slab S2 at a different level than that of the slab S1 that supports the righthand wheels.

Furthermore, the steering system 150 allows the transporter 10 to move the barriers B laterally as they are being transported longitudinally by the transporter 10. This can be useful, for example, where it is desired to pick up a barrier at a first side of a lane, move it longitudinally along the lane, and then deposit it at the other side of the lane. Once the desired direction of lateral movement has been determined and the appropriate ones of the removable pins 160a, 160b have been removed, the steering system 150 can be remotely controlled by an operator to position the guide follower 156 and the link 108 for straight travel (as shown Figure 4) or for lateral travel (as shown in Figure 6).

Because the transporter 10 is less than 1.22 m (four feet) in width, the transporter 10 and the engaged barriers B can be maintained entirely within a conventional breakdown lane as the transporter 10 is driven from the original to the new position. This significantly reduces interference with traffic on the adjacent roadway. Furthermore, since each end of the transporter 10 is provided with a tractor, the transporter 10 can shuttle back and forth between the original and the new positions without turning around, and without obstructing traffic.

From the foregoing, it should be apparent that an improved barrier transporter has been described which allows barriers to be moved longitudinally along a roadway without disconnecting barriers within the transported length, and often without obstructing traffic flow during barrier transport.

Of course, it should be understood that a wide range of changes and modifications can be made to the preferred embodiment described above. For example, other types of actuators may be substituted for the cylinders discussed above, and remotely controlled stops may be substituted for the removable pins 160a, b described above. If desired, the leveling system may be manually rather than automatically controlled. It is therefore intended that the foregoing detailed description be regarded as illustrative rather than limiting, and that it be understood that it is the following claims, including all equivalents, which are intended to define the scope of this invention.

## Claims

1. A highway barrier transporter (10) comprising a plurality of articulated barrier transporting units (12), each comprising at least one wheel assembly and at least one lifting assembly, said lifting assembly configured to lift, support and lower at least one highway barrier (B), said wheel assembly comprising at least first and second wheels (30) configured to support the highway barrier above a roadway for longitudinal movement along the roadway with the highway barrier positioned between the two wheels (30); characterised in that
a steering system (150) is coupled to the wheels (30) of at least a plurality of the barrier transporting units (12) and is operative to steer the coupled wheels (30) to a selected side of the transporter (10) to cause the barrier transporting units (12) each to shift laterally to said selected side during longitudinal movement of the transporter (10).

2. A highway barrier transporter (10) as claimed in claim 1 characterised in that the steering system (150) comprises:
a plurality of actuators (152), each mounted on a respective one of the barrier transporting units (12) and coupled to the respective wheel assembly to steer the respective wheel assembly; and
a controller (166) coupled to the actuators (152) to cause the actuators (152) to steer the coupled wheels (30) to said selected side.

## Patentansprüche

1. Eine Transportvorrichtung (10) für Fahrbahnseitenbegrenzungen, die eine Mehrzahl von gelenkigen Transporteinheiten (12) für Seitenbegrenzungen umfaßt, von denen jede mindestens eine Radeinrichtung und mindestens eine Hebevorrichtung umfaßt, wobei die genannte Hebevorrichtung ausgestaltet ist, mindestens eine Fahrbahnseitenbegrenzung (B) anzuheben, zu halten und abzusenken, die genannte Radeinrichtung mindestens ein erstes und ein zweites Rad (30) umfaßt und ausgebildet ist, die Fahrbahnseitenbegrenzung oberhalb der Straße zur Bewegung in Längsrichtung entlang der Straße zu tragen, wobei die Fahrbahnseitenbegrenzung zwischen den zwei Rädern (30) angeordnet ist; **dadurch gekennzeichnet**, daß
ein Lenksystem (150) mit den Rädern (30) von mindestens einer Mehrzahl der Transporteinheiten (12) für Seitenbegrenzungen gekoppelt ist und betreibbar ist, die gekoppelten Räder (30) zu einer ausgewählten Seite der Transportvorrichtung (10) zu lenken, um zu bewirken, daß sich jede der Transporteinheiten (12) für Seitenbegrenzungen seitlich zu der genannten ausgewählten Seite während der Bewegung in Längsrichtung der Transportvorrichtung (10) verschiebt.

2. Eine Transportvorrichtung (10) für Fahrbahnseitenbegrenzungen, wie in Anspruch 1 beansprucht, **dadurch gekennzeichnet**, daß das Lenksystem (150) umfaßt:
eine Mehrzahl von Betätigungsvorrichtungen (152), von denen jede an einer entsprechenden der Transporteinheiten (12) für Seitenbegrenzungen angebracht und mit der entsprechenden Radeinrichtung gekoppelt ist, um die entsprechende Radeinrichtung zu lenken; und
eine Steuerung (166), die mit den Betätigungsvorrichtungen (152) gekoppelt ist, um zu bewirken, daß die Betätigungsvorrichtungen (152) die gekoppelten Räder (30) zu der genannten ausgewählten Seite lenken.

## Revendications

1. Organe (10) de transport de barrières de voies routières, comprenant plusieurs unités articulées (12) de transport de barrière comprenant chacune au moins un ensemble à roues et au moins un ensemble de levage, l'ensemble de levage ayant une configuration lui permettant de soulever, supporter et abaisser au moins une barrière (B) de voie routière, l'ensemble à roues comprenant au moins une première et une seconde roue (30) ayant une configuration leur permettant de supporter la barrière au-dessus d'une route afin qu'elle puisse être déplacée longitudinalement le long de la route, la barrière étant placée entre les deux roues (30), caractérisé en ce que :
un système de direction (150) est couplé aux roues (30) d'au moins plusieurs unités (12) de transport de barrière et est destiné à diriger les roues accouplées (30) vers un côté choisi de l'organe de transport (10) de manière que les unités (12) de transport de barrière se déplacent chacune latéralement du côté choisi pendant le déplacement longitudinal de l'organe de transport (10).

2. Organe (10) de transport de barrières de voies routières selon la revendication 1, caractérisé en ce que le système de direction (150) comporte :
plusieurs organes de manoeuvre (152) montés chacun sur une unité respective parmi les unités (12) de transport de barrière et couplés à l'ensemble respectif à roues de manière que l'ensemble respectif à roues soit dirigé, et
un organe (166) de commande, couplé aux organes de manoeuvre (152) afin que les organes de manoeuvre (152) dirigent les roues couplées (30) vers le côté choisi.
